# EUROPEAN PATENT SPECIFICATION

(11) **EP 0 262 847 B1**
(45) Date of publication and mention of the grant of the patent: **28.07.1993**
(21) Application number: 87308327.3
(22) Date of filing: 21.09.1987
(51) Int. Cl.: G02B 6/38

(54) **Optical fiber connecting means**
Faseroptischer Verbinder
Connecteur à fibres optiques

(30) Priority: 29.09.1986 US 912021
(43) Date of publication of application: 06.04.1988
(73) Proprietor: AT&T Corp., New York, NY 10013-2412 (US)
(72) Inventor: Freeman, Lucius Joseph, Hartwell Georgia 30643 (US); Gagen, Paul Francis, Duluth Georgia 30136 (US)
(74) Representative: Johnston, Kenneth Graham

(56) References cited:
- EP-A- 43 422
- FR-A- 2 500 642
- GB-A- 1 520 679
- GB-A- 2 022 284
- JP-A-60 247 204
- US-A- 4 470 180
- IBM TECHNICAL DISCLOSURE BULLETIN, vol. 25, no. 7A, December 1982, pages 3433-3434; L. BALLIET et al.: "Fiber-optic splicing tool"

## Description

### Field of the Invention

This invention pertains to optical fiber connecting means comprising fiber-to-fiber mating means.

### Background of the Invention

Optical fiber connectors and splices (hereinafter referred to collectively as "connectors") are an essential part of substantially any optical fiber communication system. For instance, connectors may be used to join segments of fiber into long lengths, or to connect fiber to active devices such as radiation sources, detectors or repeaters, or to passive devices such as switches or attenuators.

Once commercially significant connector type can be generically described as comprising first and second tubular means (to be referred to herein as first and second "plugs") adapted for receiving in the bore thereof an end of an optical fiber, and means for maintaining the first and second plugs radially aligned such that the cores of the respective optical fibers in the plugs are substantially aligned. Connectors of this type will be referred to herein as "aligned plug" (AP) connectors. AP connectors typically comprise means for maintaining the fiber ends longitudinally essentially fixed relative to each other. Typically, the first and second plugs are cylindrical, with the axis of the longitudinal bore substantially coinciding with the axis of the cylindrical plug. Furthermore, the means for maintaining the plugs radially aligned are in contact with the outer cylinder surfaces of the respective plugs, and the connector is without provision for varying the radial position of the optical fiber core relative to the axis of the plug wherein the fiber is held. Examples of such connectors are disclosed, for instance, in U.S. Patents 4,541,685 and 4,545,644. See also U.S. Patent 4,470,180, which discloses an optical fiber connector (not an AP connector). The connector comprises a housing with an axial passageway therethrough, the passageway having wall portions adapted to support the fibers, and wall portions which will be spaced from the fiber.

The '685 patent discloses a connector comprising two cylindrical plugs and an alignment sleeve. AP connectors of this type, in which the alignment means circumferentially surround, or at least substantially surround, the two plugs, will be referred to as "plug-and-sleeve" connectors. The '644 patent discloses a connector wherein the alignment means comprise cylindrical alignment rods, with typically two of the alignment rods carrying a "flat" extending from one end of the rod to approximately the middle of the rod, whereby exact fiber core alignment can be achieved by rotation of one plug relative to the other. The alignment rods are maintained in contact with the plugs by appropriate means such as a substantially triangular flexible fixture.

AP connectors typically require the use of two plugs of essentially identical diameter to obtain a stable low loss connection, and to insure approximately equal and adequate holding force on both plugs. For instance, if in a prior art plug-and-sleeve type connector, such as shown in the '685 patent, plugs that differ significantly in outside diameter are used, the sleeve cannot properly grip the smaller plug, resulting, inter alia, in possible tilt or other misalignment of the fiber cores as well as in possibly inadequate retaining force on the smaller plug. This occurs because the two halves of the sleeve are tightly coupled with respect to radial deformation. By this we mean that radial extension of one sleeve half, e.g., by insertion of a plug into the sleeve, leads to an analogous radial extension (of the same type, and of similar but not necessarily of exactly the same magnitude) of the other sleeve half.

Reduced mechanical and thermal stability of the connection as well as, typically, increased optical loss would result also in other AP connectors if plugs of substantially different outer diameter were mated. For instance, in one commercially available AP single mode fiber connector that uses glass plugs and glass alignment rods, specifications call for the outside diameters of the two mating plugs to be equal to within about 1 µm. Maintenance of such close tolerances involves manufacturing costs that would not be present if this specification could be relaxed.

At least some prior art AP connectors, e.g., in plug-and-sleeve type connectors, it not only is necessary that the pair of plugs be closely matched with respect to their outside diameter but also that the diameter of the matched plugs be kept within relatively narrow limits, in order to achieve stable optical coupling. For instance, in one commercially available plug-and-sleeve type connector the permitted variation in plug diameter is about ± 6 µm. Use of plugs with diameters outside this range (even if the two plugs are matched) results in relatively poor gripping and/or alignment of the plugs by the sleeve, or overstressing of the sleeve, and, consequently, in unstable mechanical and optical coupling between the fibers.

As will undoubtedly be appreciated by those skilled in the art, a piece part having one or more dimensions with close tolerances is more costly to manufacture than it would be to manufacture the same part with larger tolerances. Thus, significant cost reduction could be attained with alignment sleeves capable of accommodating a greater range of plug diameter.

In view of the economic advantages and possible improved performance that would result if current tight tolerances on the outside diameters of plugs to be used in AP connectors could be relaxed, AP fiber connectors able to accommodate plug pairs whose members differ in outside diameter by more than is acceptable in analogous prior art connectors, and/or that can accommodate a substantially greater range of plug diameters than is possible with prior art AP connectors, would be of substantial interest. This application discloses such connectors.

### Glossary and Definitions

A "plug" herein is a cylindrical piece part, having an axial bore, an outer cylinder surface, and two end faces. The end of an optical fiber is inserted into the bore and held therein by adhesive or other appropriate means, such that the fiber end extends beyond the plug. The assemblage is then prepared such that the fiber end is essentially flush with the free end face of the plug.

An "AP connector" comprises two plugs, prepared as above, maintained by radial alignment means such that the cylinder axes of the respective plugs are essentially collinear, and maintained further such that the two free end faces are in essentially fixed longitudinal relationship relative to each other. The free end faces can be in direct contact, or index matching means can be present therebetween. The radial alignment means act directly on the outer cylinder surface of the respective plugs. In AP connectors according to the invention, the radial alignment means have two "halves" (not necessarily of equal length or the same physical orientation).

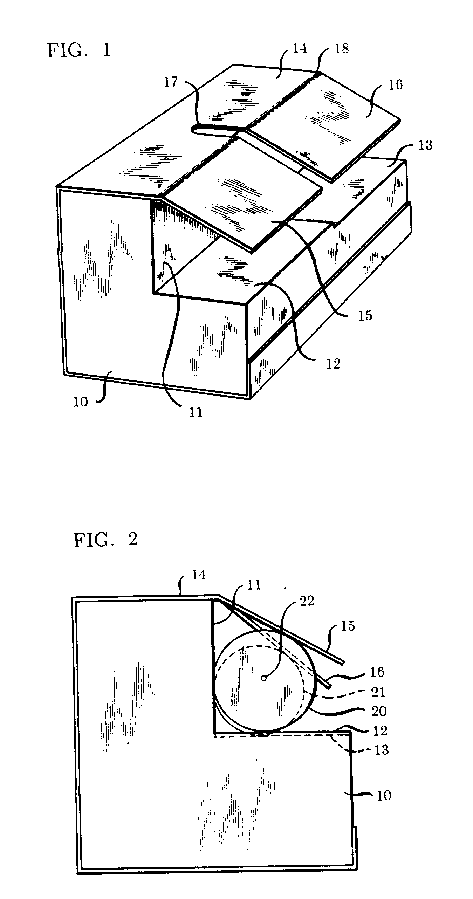

Radial alignment means are "bilaterally decoupled" or "longitudinally decoupled" if radial deformation of one half of the alignment means does not produce an analogous radial deformation of the other half. A radial deformation of one half is considered to be non-analogous to that of the other half if, inter alia, the magnitude of the two deformations is substantially different (typically by at least about 30%), or if the nature of the two deformations differs with respect to the two plugs to be aligned. For examples of bilaterally decoupled radial alignment means see, for instance, FIGS. 1 and 4-12.

"Limited-contact" radial alignment means are radial alignment means shaped such that only a limited portion (typically less than 50%) of the outer cylinder surface of a plug is in contact with the inner surface of the alignment means, with the remainder of the outer cylinder surface being spaced from the inner surface.

According to the present invention, there is provided a connector as defined in claim 1.

We are disclosing herein AP optical fiber connectors that can accommodate pairs of plugs, the members of which have outer diameters that can differ by more than is acceptable in analogous prior art AP-type connectors, typically by more than 1 or even 10µm, and/or that can accommodate a wider range (typically greater than ± 10 or even ±30 µm) of plug diameters than is acceptable in prior art AP connectors.

Disclosed are also rotationally tunable AP connectors that can meet both of the above objectives.

The first objective can be met by providing AP connectors comprising bilaterally decoupled radial alignment means. The decoupling can be achieved, for instance, by means of one or more lateral slits at or near the longitudinal midpoint of the alignment means. In plug-and-sleeve connectors, the alignment sleeve comprises the lateral slit(s), whereas in other AP connectors it is typically a compliant member (that serves to hold the plugs in contact with at least two alignment surfaces) that comprises the lateral slit(s). Bilateral decoupling can also be achieved by other means, e.g., by provision of an EC limited contact alignment sleeve in which one half is rotationally offset with respect to the other.

In a broad sense we are disclosing a combination that comprises a first length of an optical fiber signal-transmissively joined to a second length of optical fiber by means of an optical fiber connector according to the invention.

The connector comprises a first and a second cylindrical plug, the first and second plug each having an outer diameter, an axis, a cylinder surface, an end face and a longitudinal bore adapted for receiving therein a portion of the first and second optical fiber, respectively. The fiber is fixed in the respective bore, the bore having an axis that is essentially coincident with the axis of the respective plug, and the end of the optical fiber is essentially flush with the end face of the respective plug. The connector further comprises alignment means for maintaining the first and second plugs aligned such that the axis of the first plug is substantially collinear with the axis of the second plug, with opposed plug end faces, the alignment means contacting the first and second plug cylinder surfaces.

The alignment means comprise bilaterally decoupled first means having two (not necessarily identical) halves and being of a type such that radial deformation of one half of the first means does not produce an analogous radial deformation of the other half of the first means, such that the connector can accommodate a first plug whose outer diameter differs by a relatively large amount from that of the second plug. Significantly, the alignment means comprise an alignment block having two arms and being of basically L-shaped cross section and adapted for receiving the plugs in the space defined by the two arms. The first means comprise spring clip means that are adapted for urging the first and the second plugs into the space defined by the two arms of the alignment block, and that at least partially circumferentially surround at least a portion of the alignment block and extend over at least part of the space defined by the two arms of the alignment block, and furthermore comprise a transverse slit that defines the two halves, with one half of the spring clip urging the first plug, and with the other half urging the second half.

### Brief Description of the Drawing

FIG. 1 is a perspective view of the radial alignment means of an exemplary AP-type connector according to the invention;
FIGS. 2 and 3, respectively, depict a schematic end view and a schematic exploded perspective view of the exemplary inventive connector; and
FIGS. 4 and 5 are schematic end views of different embodiments of the invention.
FIG. 6 shows a schematic perspective view of a bilaterally decoupled longitudinally split alignment sleeve that can be used in a plug-and-sleeve type connector of the type disclosed in the '685 patent.

### Detailed Description of Preferred Embodiments

FIG. 1 schematically shows the relevant portion of a currently preferred embodiment of an optical fiber connector according to the invention, namely, an AP connector, adapted for rotary core alignment, that meets the first and second objectives. In FIG. 1, reference numeral 10 refers to a block of substantially L-shaped cross section (advantageously glass, steel or other relatively non-compliant material), and 14 to compliant means (e.g., an appropriately shaped beryllium copper spring clip) that serve to maintain the two plugs in contact with the reference surfaces. Reference surface 11 is shown to be (but need not be) recess-free. The other reference surface of the L-block is shown to comprise a portion 13 that is recessed with respect to portion 12. The amount of recess shown in FIG. 1, as well as in other Figures, is not to scale. In an actual connector, the recess exemplarily is of the order of 1-10µm, and can easily be produced by known means, e.g., by sandblasting. The included angle defined by the reference surfaces is shown to be 90°. However, as will be appreciated by those skilled in the art, this is exemplarily only, and at least, in principle, the included angle can be any angle less than 180°.

The compliant means 14 is shown to be bifurcated by means of a slit 17, thereby defining the two halves of the alignment means and creating tabs 15 and 16, resulting in bilateral decoupling of the two halves of the alignment means. The length of slit 17 depends on individual requirements. For instance, the slit could extend only part of the way to edge 18, it can extend beyond edge 18 as shown, or, in principle, it can extend the full peripheral length of 14, such that 14 would consist of two independent but substantially identical spring clips. Tabs 15 and 16 advantageously are bent out of the horizontal plane (thereby forming edge 18) to an extent such that, after insertion of a plug, the plug exerts approximately equal forces on alignment surfaces 11 and 12 (or 11 and 13). Typically, the dividing step between surfaces 12 and 13 is positioned such that the two surfaces are of substantially equal length, or possibly that 13 is somewhat longer than 12, such that plugs of equal length can be accommodated symmetrically.

It will be appreciated that the recess is optional, and that the connector meets the first and second objectives with or without the recess. Even rotary alignment of the fiber cores is possible in many cases without a recess, but the presence of an appropriate recess generally makes possible rotational core alignment for a wider range of eccentricities (of the fiber core relative to the cylinder axis of the plug).

FIG. 2 shows schematically the preferred embodiment of the inventive connector in end view, with plugs 20 and 21 in position. As depicted in FIG. 2, plug 20 is in contact with reference surfaces 11 and 12 and is maintained in this position by means of tab 15, and plug 21 is in contact with reference surfaces 11 and 13 and is maintained in this position by means of tab 16. Reference numeral 22 refers to the axial bore of plug 20. After insertion of the appropriately prepared plugs into the alignment means, one plug can be rotated with respect to the other until maximum fiber-to-fiber optical coupling is achieved. The aligned plugs can then be fixed in position by adhesive means. However, in the currently preferred embodiment, the plugs are maintained in position solely by means of the elastic forces exerted by the tabs on the plugs. Index matching material optionally can be present in the interface between the two plugs.

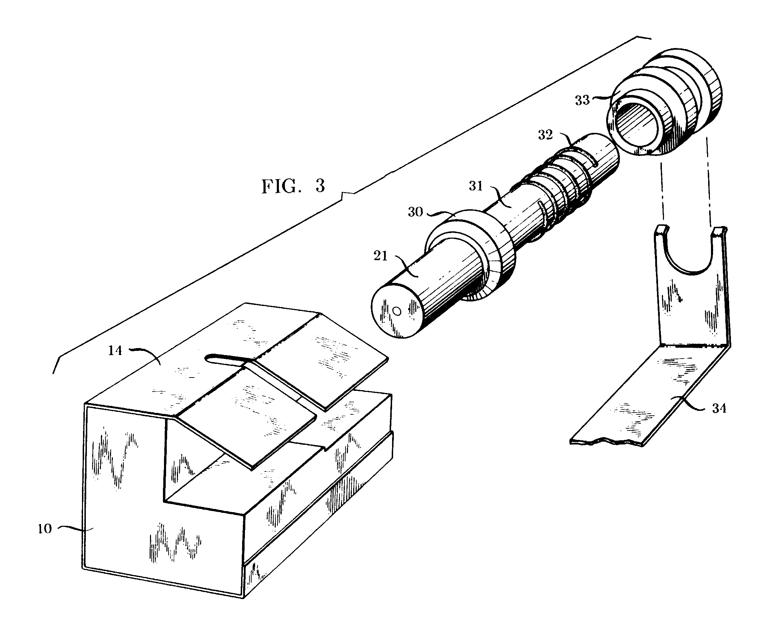

FIG. 3 shows schematically, in exploded perspective view, a portion of the exemplary preferred connector. The connector comprises, in addition to previously discussed L-block 10 and spring clip 14, two glass plugs (of which only plug 21 is shown). The plug is held (e.g., adhesively or by means of a press-fit) in a bushing 30. Integral with the bushing is a barrel 31 over which spring 32 fits. Grooved collar 33 slides onto 31 and serves to retain 32. It also engages optional U-shaped mounting clip 34.

The fiber termination is prepared by removing the coating from the end portion of a coated optical fiber, threading the fiber through the bore of bushing 30 and the bore of plug 21 and fixing the fiber adhesively or by other suitable means to the plug and the bushing such that the fiber end extends into 31. The protruding bare fiber is then scribed, broken, and polished by known means such as to be flush with the free end face of the plug. After similarly preparing the second fiber termination, tabs 15 and 16 are raised sufficiently (advantageously by means of appropriately shaped pliers) such that the two plugs can be inserted, with each plug being in contact with only one of the tabs. After optimizing the alignment of the two fiber cores by rotating one plug relative to the other, the assembly can be inserted into the mounting clip, which can comprise means for attaching the assembled fiber connector to a connector board or other appropriate holding means (not shown). Furthermore, other means for mounting and/or exerting an inward directed axial force on the plugs are possible and can be used, as will be appreciated by those skilled in the art.

In the currently preferred embodiment, the glass plugs and the L-block are PYREX, the spring clip 14 is formed from Be-Cu stock, and bushing 30, barrel 31, and collar 33 are molded plastic. The offset in the L-block is typically ≦8 µm, typically permitting core alignment when the total eccentricity (plug axis relative to bore axis, fiber axis relative to bore axis, and core axis relative to fiber axis) does not substantially exceed 8 µm. Although in the currently preferred embodiment of the invention, the L-block 10 is a glass block, it can, in principle, consist of any desired low compliance material and be prepared by any appropriate method. For instance, 10 can be a molded polymer block or a machined metal block. However, due to the close match of mechanical and thermal properties that can exist between a glass block 10 and glass plugs 20 and 21, we currently prefer this combination of materials.

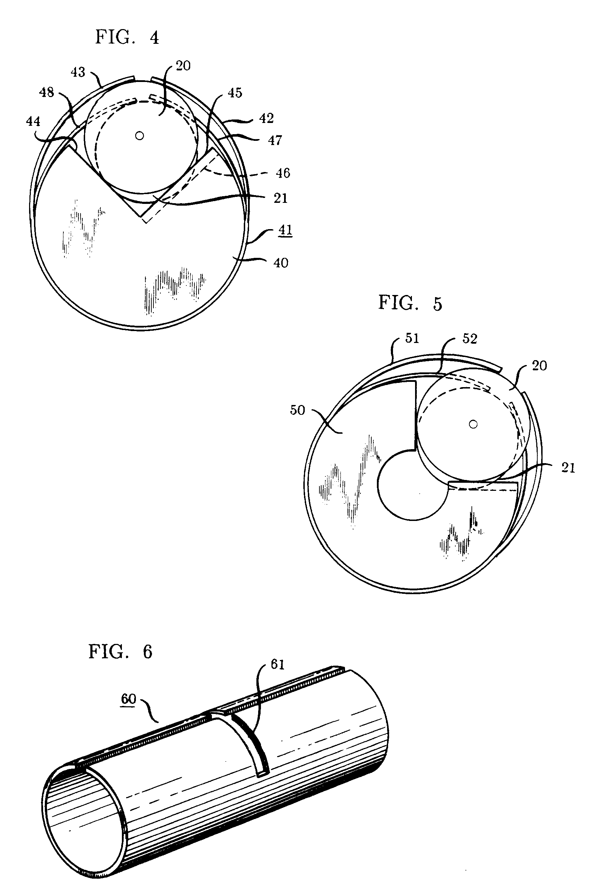

FIGS. 4 and 5 schematically show in end view alternative embodiments of the inventive connector. In particular, alignment block 40 of FIG. 4 has basically circular cross-section, with a sector removed so as to provide two reference surfaces. As depicted, reference surface 44 is recess-free, whereas the other reference surface comprises a recessed portion 46 and a non-recessed portion 45, thereby facilitating rotational core alignment. Plug 20 is in contact with surfaces 44 and 45, whereas plug 21 is in contact with surfaces 44 and 46. Circumferential spring clip 41 contains two slits such that tabs 42 and 47 and 43 and 48 are formed, with tabs 42 and 43 being in contact with plug 20, whereas tabs 47 and 48 are in contact with plug 21.

FIG. 5 depicts a connector comprising tubular alignment block 50 from which a sector is removed such as to form alignment surfaces 52 through 54. The alignment means comprise two separate spring slips 51 and 52, with 51 gripping plug 20 only, and 52 gripping plug 21 only. As will be obvious to those skilled in the art, the spring clips of FIGS. 4 and 5 could be used interchangeably.

It will also be appreciated by those skilled in the art that AP connectors as shown in FIGS. 1-5 can have recessed portions in one or both reference surfaces or have no recess at all. However, since, in the last case, rotational core alignment may not be attainable for some combinations of plugs (depending on eccentricities), it may be advantageous to have available recess-free as well as recessed alignment blocks.

Fig. 6 shows a bilaterally decoupled longitudinally split alignment sleeve 60 for use in a plug-and-sleeve connector that meets the first objective. Decoupling is provided through lateral slit 61.

As will be appreciated by those skilled in the art, the principles disclosed herein are of broad applicability in the field of optical fiber connectors, and can be embodied in a variety of specific designs, of which the above disclosed designs are only exemplary.

## Claims

1. A connector for signal transmissively coupling a first length of a first optical fiber to a second length of a second optical fiber, the connector comprising
a) first and second cylindrical plugs (20, 21), the first and second plugs each having an outer diameter, an axis, a cylinder surface, an end face and a longitudinal bore (22) adapted for receiving therein a portion of the first and second optical fibers, respectively, the fiber to be fixed in the respective bore, the bore having an axis that is substantially coincident with the axis of the respective plug, the end of the optical fiber to be substantially flush with the end face of the respective plug;
b) alignment means for maintaining the first and second plugs aligned such that the axis of the first plug is substantially collinear with the axis of the second plug, with opposed plug end faces, the alignment means contacting the first and second plug cylinder surfaces and comprising bilaterally decoupled spring clip means (e.g., 14) having two (not necessarily identical) sections (e.g., 15, 16) and being of a type such that a deformation of one section of the spring clip means does not produce an analogous deformation of the other section of the spring clip means, such that the connector can accommodate a first plug whose outer diameter differs by a relatively large amount from that of the second plug;
CHARACTERIZED IN THAT
c) the alignment means comprise an alignment block (10), in the form of a solid or tubular block of circular crosssection that has had a sector removed thereby defining two reference surfaces, or an alignment block having two arms which together form a block of basically L-shaped cross section the block being adapted for receiving the plugs in the internal space defined by the two arms; or the two reference surfaces and
d) the spring clip means is a single clip that clips onto the alignment block and is adapted for urging the first and the second plugs into said internal space, and at least partially circumferentially surrounds at least a portion of the external surface of the alignment block and extends over at least part of said internal space, and furthermore comprises a transverse slit (17) that defines two cantilever sections, with one section of the spring clip urging the first plug and with the other section urging the second plug.

2. The connector of claim 1, wherein at least one of the two arms comprises an alignment surface that comprises a recessed portion (13) and a non-recessed portion (12) essentially parallel with the recessed portion, such that one plug does not contact the recessed portion of the alignment surface and the other plug does not contact the non-recessed portion thereof.

3. The connector of claim 1, wherein the alignment block is a glass block, the spring clip is a metal spring clip, and the first and second plugs are glass plugs.

4. The connector of claim 1, further comprising means (e.g., 34) for urging the end face of the first plug towards the end face of the second plug.

## Patentansprüche

1. Verbinder zur Signalübertragungskopplung einer ersten Länge einer ersten optischen Faser mit einer zweiten Länge einer zweiten optische Faser, mit folgenden Merkmalen:
a) ein erster und ein zweiter zylindrischer Stecker (20, 21), die jeweils einen äußerer, Durchmesser, eine Achse, eine zylindrische Oberfläche, eine Endfläche und eine Längsbohrung (22) aufweisen, die zur Aufnahme eines Teils der ersten bzw. zweiten optischen Faser angepaßt ist, wobei die Faser in der jeweiligen Bohrung befestigt ist, die Bohrung eine Achse aufweist, die im wesentlichen mit der Achse des jeweiligen Steckers zusammenfällt, und das Ende der optischen Faser im wesentlichen zu der Endfläche des jeweiligen Steckers fluchtet;
b) eine Ausrichteinrichtung zur Aufrechterhaltung der Ausrichtung des ersten und zweiten Steckers, so daß die Achse des ersten Steckers im wesentlichen auf der gleichen Linie zur Achse des zweiten Steckers liegt, wobei die Endflächen der Stecker sich gegenüberstehen, die Ausrichteinrichtung an den Zylinderoberflächen des ersten und zweiten Steckers anliegt und beidseitig entkoppelte Federklipseinrichtungen (z.B. 14) aufweist, zwei (nicht notwendig identische) Abschnitte (z.B. 15, 16) besitzt und von solcher Art ist, daß eine Deformation des einen Abschnitts der Federklipseinrichtung nicht zu einer entsprechenden Deformation des anderen Abschnittes der Federklipseinrichtung führt, so daß der Verbinder einen ersten Stecker aufnehmen kann, dessen Außendurchmesser um einen relativ großen Betrag von dem des zweiten Steckers abweichen kann;
dadurch gekennzeichnet, daß
c) die Ausrichteinrichtung einen Ausrichteblock (10) in der Form eines soliden oder rohrförmigen Blocks von kreisförmigem Querschnitt umfaßt, von dem ein Ausschnitt entfernt worden ist, um so zwei Bezugsoberflächen zu bestimmen, oder ein Ausrichteblock mit zwei Armen darstellt, die zusammen einen Block mit grundlegend L-förmigen Querschnitt bilden, wobei der Block zur Aufnahme der Stecker in dem von den beiden Armen ohne den beiden Bezugsflächen definierten Innenraum ausgebildet ist, und daß
d) die Federklipseinrichtung ein einzelner Klips ist, der sich am Ausrichteblock anklammert und dazu ausgebildet ist, den ersten und den zweiten Stecker in den Innenraum zu drängen und mindestens teilweise mindestens einen Teil der äußeren Oberflächen des Ausrichteblocks in Umfangsrichtung umgibt und sich über mindestens einen Teil des Innenraums erstreckt sowie weiterhin einen Querschlitz (17) aufweist, welcher zwei freitragende Abschnitte bestimmt, wobei der eine Abschnitt des Federklipses den ersten Stecker und andere Abschnitt den zweiten Stecker in den Innenraum drängt.

2. Verbinder nach Anspruch 1,
dadurch gekennzeichnet,
daß mindestens eine der beiden Arme eine Ausrichteoberfläche aufweist, welche ein Aussparungsteil (13) und ein Nicht-Aussparungsteil (12) besitzt, der im wesentlichen parallel zu dem Aussparungsteil verläuft, so daß der eine Stecker nicht den Aussparungsteil der Ausrichtefläche berührt und der andere Stecker den nicht ausgesparten Teil nicht berührt.

3. Verbinder nach Anspruch 1,
dadurch gekennzeichnet,
daß der Ausrichteblock aus Glas besteht, der Federklips aus Metall gefertigt ist und die ersten und zweiten Stecker aus Glas sind.

4. Verbinder nach Anspruch 1,
gekennzeichnet durch eine weitere Einrichtung (z.B. 34) zum Drängen der Endfläche des ersten Steckers in Richtung auf die Endfläche des zweiten Steckers.

## Revendications

1. Un connecteur pour coupler, de façon à permettre la transmission de signaux, une première longueur d'une première fibre optique à une seconde longueur d'une seconde fibre optique, le connecteur comprenant
a) des première et seconde fiches cylindriques (20, 21), chacune des première et seconde fiches cylindriques ayant un diamètre extérieur, un axe, une surface cylindrique, une face d'extrémité et un alésage longitudinal (22) prévu pour recevoir à l'intérieur une partie des première et seconde fibres optiques, respectivement, la fibre devant être fixée dans l'alésage respectif, l'alésage ayant un axe qui coîncide pratiquement avec l'axe de la fiche respective, et l'extrémité de la fibre optique affleurant pratiquement la face d'extrémité de la fiche respective;
b) des moyens d'alignement pour maintenir les première et seconde fiches alignées, de façon que l'axe de la première fiche soit pratiquement aligné avec l'axe de la seconde fiche, avec les faces d'extrémités des fiches juxtaposées, les moyens d'alignement venant en contact avec les surfaces cylindriques des première et seconde fiches et comprenant une structure de pince à ressort découplée de façon bilatérale (par exemple 14) ayant deux sections (non nécessairement identiques) (par exemple 15, 16) et étant d'un type tel qu'une déformation d'une section de la structure de pince à ressort ne produit pas une déformation analogue de l'autre section de la structure de pince à ressort, afin que le connecteur puisse accepter une première fiche dont le diamètre extérieur présente une différence relativement grande par rapport au diamètre extérieur de la seconde fiche;
CARACTERISE EN CE QUE
c) les moyens d'alignement comprennent un bloc d'alignement (10), se présentant sous la forme d'un bloc plein ou tubulaire de section transversale circulaire dont un secteur a été enlevé, pour définir ainsi deux surfaces de référence, ou un bloc d'alignement ayant deux branches qui forment conjointement un bloc ayant fondamentalement une section transversale en forme de L, le bloc étant conçu pour recevoir les fiches dans l'espace interne qui est défini par les deux branches ou les deux surfaces de référence; et
d) la structure de pince à ressort consiste en une seule pince qui est fixée par pincement au bloc d'alignement et qui est conçue pour exercer sur les première et seconde fiches une force les appliquant dans l'espace interne précité, et elle entoure au moins partiellement la périphérie d'au moins une partie de la surface externe du bloc d'alignement et s'étend sur au moins une partie de l'espace interne précité, et elle comprend en outre une fente transversale (17) qui définit deux sections en porte-à-faux, une section de la pince à ressort exerçant une force sur la première fiche, tandis que l'autre section exerce une force sur la seconde fiche.

2. Le connecteur de la revendication 1, dans leqiel l'une au moins des deux branches comprend une surface d'alignement qui comporte une partie en retrait (13) et une partie (12) qui n'est pas en retrait et qui est pratiquement parallèle à la partie en retrait, de façon qu'une fiche ne vienne pas en contact avec la partie en retrait de la surface d'alignement, tandis que l'autre fiche ne vient pas en contact avec la partie de cette surface qui n'est pas en retrait.

3. Le connecteur de la revendication 1, dans lequel le bloc d'alignement est un bloc en verre, la pince à ressort est une pince à ressort en métal et les première et seconde fiches sont des fiches en verre.

4. Le connecteur de la revendication 1, comprenant en outre des moyens (par exemple 34) pour solliciter la face d'extrémité de la première fiche en direction de la face d'extrémité de la seconde fiche.
